# EUROPÄISCHE PATENTSCHRIFT

(11) **EP 2 766 520 B1**
(45) Veröffentlichungstag und Bekanntmachung des Hinweises auf die Patenterteilung: **28.03.2018**
(21) Anmeldenummer: 12790398.7
(22) Anmeldetag: 11.10.2012
(51) Int. Cl.: D06M 15/03, D06M 15/61, B01D 39/00, B01D 69/00, B01D 39/08, B01J 20/26, B01J 20/28, B01J 20/32, B01D 69/02, B01D 71/82, C02F 1/28, C02F 1/66, C08J 5/20, C02F 101/10, C02F 101/20, C02F 103/16, C02F 101/22

(54) **MATERIALIEN MIT IMMOBILISIERTEN POLYELEKTROLYTEN**
MATERIALS CONTAINING IMMOBILISED POLYELECTROLYTES
MATÉRIAUX CONTENANT DES POLYÉLECTROLYTES IMMOBILISÉS

(30) Priorität: 14.10.2011 DE 102011115903
(43) Veröffentlichungstag der Anmeldung: 20.08.2014
(73) Patentinhaber: DTNW Deutsches Textilforschungszentrum Nord-West gemeinnützige GmbH, 47798 Krefeld (DE)
(72) Erfinder: OPWIS, Klaus, 47623 Kevelaer (DE); MAYER-GALL, Thomas, 47475 Kamp-Lintfort (DE); GUTMANN, Jochen, Stefan, 47803 Krefeld (DE); JANSEN, Thomas, 45981 Mülheim (DE); KMOCH, Gerhard, 45661 Recklinghausen (DE); HOFFMANN, Uwe, 44869 Bochum (DE)
(74) Vertreter: Thiel, Christian
(86) Internationale Anmeldenummer: PCT/EP2012/004253
(87) Internationale Veröffentlichungsnummer: WO 2013/053473

(56) Entgegenhaltungen:
- WO-A2-97/02077
- WO-A2-2007/024974
- DE-A1- 2 332 983
- DE-A1- 2 837 845

## Beschreibung

Die Erfindung betrifft die Verwendung polymerer Trägermaterialien, insbesondere textiler Materialien, die mit kationischen Polyelektrolyten ausgerüstet sind zur Bindung von multivalenten anionischen Metallationen aus wässrigen Lösungen - insbesondere Abwässern - eignen.

Insbesondere bei der Oberflächenveredlung von Metallen wie etwa der oxidativen Passivierung oder dem elektrolytischen Verchromen wird mit Chromaten, d.h. Oxometallanionen von Chrom der Oxidationsstufe +VI, gearbeitet. Derartige Chromate (insbesondere Monochromat CrO₄²⁻ und Dichromat Cr₂O₇²⁻) gelten als äußerst giftig, krebserzeugend und erbgutschädigend. Dementsprechend gelten für Cr(VI)-haltige Verbindungen strenge Grenzwerte - beispielsweise darf der Gesamtchromgehalt von Trinkwasser in Deutschland laut Trinkwasserverordnung nicht mehr als 0,05 mg/l betragen. Dennoch weisen Böden und Grundwässer im Bereich von Industrieanlagen zur Metallveredelung häufig hohe Chromatbelastungen auf. Grundsätzlich existieren auch andere Oxometallanionen wie Arsenate, Wolframate, Molybdate oder Vanadate, die zu einer Grundwasserbelastung führen können.

Polymere Materialien bzw. Trägermaterialien sind Materialien aus einem polymeren Werkstoff, der in der Regel als Folie, Film oder Membran vorliegt. Bevorzugte polymere Trägermaterialien sind textile Materialien, die eine deutlich größere Oberfläche aufweisen, als polymere Folien und Filme. Als polymere Trägermaterialien kommen im Grunde genommen beliebige Materialien aus polymerisierbaren monomeren Substanzen in Frage.

Textile Materialien bestehen in der Regel aus natürlichen oder synthetischen faserbildenden Polymeren, wie z.B. aus den Naturfasern Baumwolle und Leinen bzw. den Synthesefasern Polyester und Polyamid, die sich aufgrund der Art und Anzahl ihrer funktionellen Gruppen auf der Oberfläche nur bedingt zur Adsorption von anionischen Metallionen eignen.

Polyelektrolyte sind organische Verbindungen, die sich aufgrund ihrer funktionellen Gruppen in wässrigen Lösungen als Säure bzw. Base verhalten können. Aminofunktionalisierte Polyelektrolyte liegen im sauren Milieu protoniert vor und können dementsprechend negativ geladene Ionen über ionische Wechselwirkungen reversibel binden.

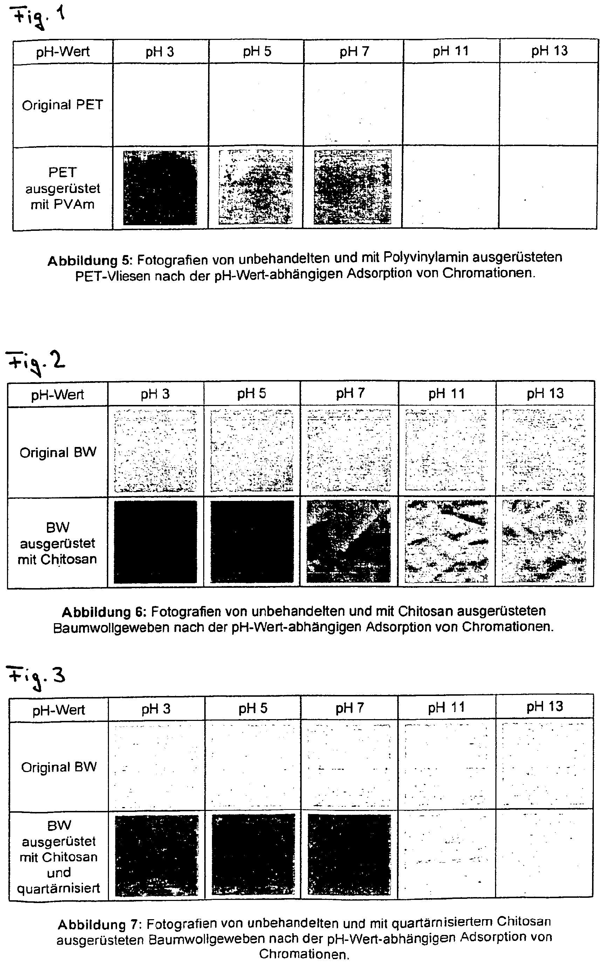

Chitosan ist ein aminofunktionalisiertes Derivat des natürlichen Biopolymers Chitin, das zum Beispiel aus den Schalen von Krebstieren oder auch mikrobiologisch gewonnen werden kann. Die Struktur des langkettigen Kohlenhydrats wird in **Abbildung 1** gezeigt. Im sauren pH-Bereich liegt es als Polykation vor. Durch eine Quartärnisierung der Aminofunktionen durch geeignete Gruppen kann es auch im neutralen pH-Wert-Bereich kationisch vorliegen.

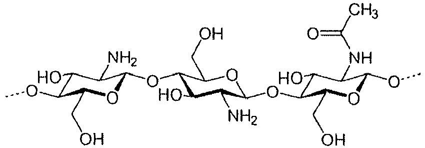

### Abbildung 1: Struktur von Chitosan.

Polyvinylamin wiederum ist ein synthetisches Polymer. Es ist außerordentlich wasserlöslich und reagiert dort stark basisch. Im sauren Milieu kann es - genau wie Chitosan - als kationischer Polyelektrolyt fungieren, wobei es über die derzeit höchste Ladungsdichte aller technischen Polymere verfügt. Die Grundstruktur von ungeladenem linearem Polyvinylamin wird in **Abbildung 2** gezeigt. Durch eine Quartärnisierung der Aminofunktionen durch geeignete Gruppen kann es auch im neutralen pH-Wert-Bereich kationisch vorliegen.

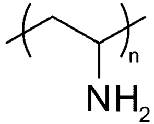

### Abbildung 2: Struktur von Polyvinylamin.

Werden, polykationische Strukturen an polymeren Trägermaterialien, wie etwa textilen Materialien, dauerhaft fixiert, so sollten sich diese in Abhängigkeit vom pH-Wert von oxometallbelasteten Wässern zur Adsorption der Oxometallanionen eignen.

Die Erfindung betrifft die Verwendung eine Ausrüstung mit immobilisierten kationischen Polyelektrolyten, die geeignet sind, anionische Metallationen aus wässrigen Lösungen zu adsorbieren.

Als polymere Materialien dienen insbesondere textile Materialien, die beim Einsatz in chemischen Prozessen aufgrund ihrer Zugänglichkeit und Durchlässigkeit Vorteile bieten. Es können im Grunde genommen beliebige Polymere eingesetzt werden, beispielsweise auch solche pflanzlicher oder tierischer Herkunft. Bevorzugt sind aber im Sinne der Erfindung synthetische Materialien, wie beispielsweise Polyester, Polyamide, Polyacrylnitrile oder Polyolefine, bzw. solche cellulosischer Natur, wie beispielsweise Baumwolle oder Viskose.

Als Polyelektrolyte eignen sich im Grunde genommen alle Substanzen, die im sauren bis neutralen pH-Wert Bereich als Polykationen vorliegen. Im Sinne der Erfindung sind aber insbesondere die aminofunktionalisierten Polyelektrolyte Chitosan und Polyvinylamin bzw. deren quartärnisierte Derivate bevorzugt.

Aminofunktionalisierte Polyelektrolyte weisen entsprechend primäre, sekundäre oder tertiäre Aminofunktionen auf, die unter sauren Bedingungen entsprechende Ammoniumfunktionen ausbilden. Insbesondere können die kationischen Polyelektrolyte auch quartärnisierte Ammoniumfunktionen aufweisen.

Gemäß den Vorüberlegungen sollten die aminofunktionalisierten Polyelektrolyte nach einer dauerhaften Fixierung an polymeren Trägermaterialien, insbesondere textilen Materialien, zur Adsorption von in unterschiedlichen Wässern gelösten anionischen Metallionen, wie z.B. Chromaten, genutzt werden können. Da Chromate anionischer Natur sind, ist davon auszugehen, dass eine Adsorption insbesondere unter sauren Bedingungen gelingt, da die Polyelektrolyten hier kationisch vorliegen, was wiederum eine ionische Wechselwirkung zum Chromat ermöglicht. Das Prinzip der Adsorption von anionischen Metallionen an aminofunktionalisierten Polymeren wird in **Abbildung 3** schematisch am Beispiel des Oxoanions Chromat veranschaulicht.

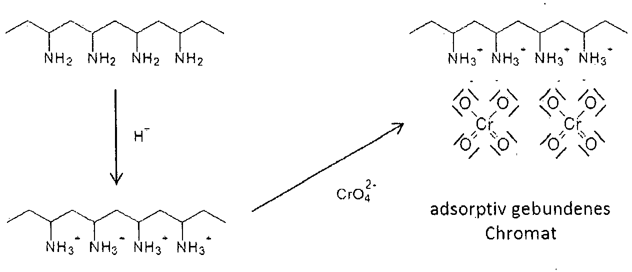

### Abbildung 3: Bindung von Chromat an protonierten Polyelektrolyten.

Die entsprechende Adsorption von Metallanionen sollte insbesondere dann weitestgehend auch im neutralen pH-Wert-Bereich der wässrigen Lösung gelingen, wenn die aminofunktionalisierten Polyelektrolyte zuvor durch geeignete chemische Gruppen quartärnisiert wurden. Das Prinzip der Adsorption von anionischen Metallionen an quartärnisierten Polyelektrolyten wird in **Abbildung 4** schematisch am Beispiel des Oxoanions Chromat veranschaulicht.

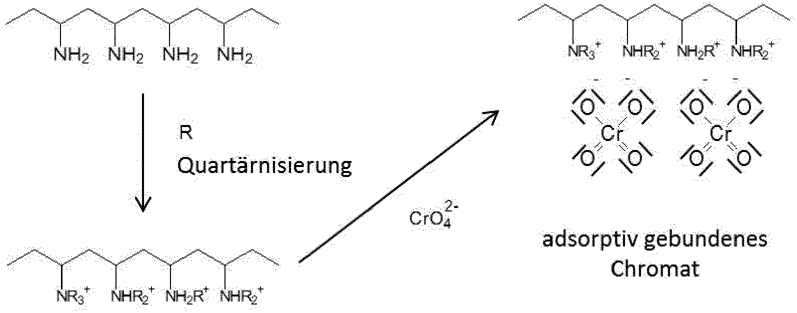

### Abbildung 4: Bindung von Chromat an quartärnisierten Polyelektrolyten.

Im Allgemeinen wird bei der Durchführung der Polyelektrolytfixierung wie folgt vorgegangen: Die im Sinne der Erfindung verstandenen Polyelektrolyte verfügen über geeignete Ankergruppen oder erhalten diese durch eine zusätzliche Derivatisierung, um sie permanent, d.h. möglichst kovalent an den polymeren Trägermaterialien fixieren zu können. Dabei werden die Trägermaterialien, insbesondere Textilien, mit dem in einem geeigneten Lösemittel vorgelegten Polyelektrolyten benetzt und über einen nasschemischen, photochemischen oder thermischen Prozess permanent fixiert.

Die Erfindung wird durch die nachfolgenden Beispiele näher erläutert.

Die für die erfindungsgemäße Verwendung ausgerüsteten polymeren Trägermaterialien können auf übliche thermische, nasschemische oder photochemische Weise erzeugt werden. Der Begriff der Immobilisierung der kationischen Polyelektrolyte beinhaltet insbesondere die chemische Anbindung an das Trägermaterial.

Soweit eine Umwandlung in sekundäre, tertiäre oder quartärnäre Funktionen gewünscht oder erforderlich ist, kann diese auf übliche Art und Weise herbeigeführt werden.

Die Erfindung betrifft die Verwendung der hier beschriebenen polymeren Trägermaterialien zur Bindung von metallischen Oxoanionen (Metallationen) aus wässerigen Lösungen und insbesondere Abwässern der chemischen Industrie. Die entsprechend ausgerüsteten Trägersubstanzen können dazu in Filteranlagen eingebracht werden. Die Verwendung entsprechend ausgestatteter Filter ist ebenfalls Gegenstand der Erfindung.

Die erfindungsgemäß verwandten ausgerüsteten Trägermaterialien können, nach der Beladung mit Metallationen, regeneriert werden, indem sie in beispielsweise in ein alkalisches Milieu überführt werden.

### Ausführungsbeispiel 1

Thermische Immobilisierung von Polyvinylamin an Polyester und Adsorption von Oxoanionen aus belasteten Wässern am Beispiel von Chromat

### A. Verwendete Materialien und Chemikalien

Als textiles Substrat diente ein handelsübliches Vlies aus Polyester (PET) mit einem Flächengewicht von 108 g/m² und einer von Dicke 1,09 mm (TAG Composites and Carpets GmbH, Krefeld).

Als Polyelektrolyt wurde das kommerziell verfügbare Polyvinylamin (PVAm) Lupamin® 9095 Spezial (BASF, Ludwigshafen) verwendet.

### B. Thermische Immobilisierung von Polyvinylamin an Polyester

Technisches Lupamin® 9095 Spezial wird mit Wasser gemischt, bis sich eine PVAm-Konzentration von 6,25 Gew.-% ergibt. Zur besseren Benetzung der textilen Materialien wird die Lösung mit kleinsten Mengen des nichtionischen

Tensids Marlipal® O13/80 versetzt. Der pH-Wert wurde mit Essigsäure auf pH 6 eingestellt. Anschließend wurden das klimatisierte Polyestervlies für 10 min in die PVAm-Lösung getaucht, definiert abgequetscht (Flottenaufnahme ca. 40 %), bei 80 °C bis zu einer Restfeuchte von ca. 25 % (entsprechend 5 - 10 min) vorgetrocknet und dann über 6 min bei 150 °C thermisch fixiert. Abschließend wurden die Proben 6 h im Soxhlet mit einem Methanol/Wasser-Gemisch (1:1) extrahiert. Das Vlies wird bei Raumtemperatur luftgetrocknet, klimatisiert und die Auflage bestimmt. Die Prozedur führt zu einer permanenten Polyvinylamin-Auflage von 6,2 Gew.-% (+/- 6 %).

### C. Chromatadsorption

Zur Bestimmung der maximalen Chromatbeladung wurden die PVAm-ausgerüsteten PET-Vliese jeweils in 5 ml 1 g/L Chromatlösung unterschiedlichen pH-Wertes (pH-Wert-Bereich 3 - 13, eingestellt mit verdünnter Salzsäure bzw. Natronlauge) eingelegt und für 30 min darin belassen. Die Proben wurden für 1 min mit destilliertem Wasser ausgespült und die Prozedur wiederholt. Anschließend wurden die Proben erneut gespült und über Nacht bei Raumtemperatur getrocknet. Nach einer visuellen Begutachtung (Chromatfärbung) wurden die Proben Mikrowellen-unterstützt in einer 70%-igen HNO₃ aufgeschlossen und der Chromgehalt quantitativ mittels ICP-OES bestimmt. **Abbildung 5** zeigt Fotografien der Vliese nach der Chromatbehandlung.

Tabelle 1 zeigt die quantitativen Analyseergebnisse der Chromatadsorption.

**Tabelle 1: pH-Wert-abhängige Adsorption von Chromat [mg/g] an mit Polyvinylamin ausgerüsteten PET-Vliesen im Vergleich zum nicht ausgerüsteten Material.**

| pH-Wert | Chromatadsorption an unbehandeltem PET [mg/g] | Chromatadsorption an mit PVAm ausgerüstetem PET [mg/g] |
|---|---|---|
| 3 | 0,02 | 11,29 |
| 5 | 0,01 | 14,00 |
| 7 | 0,03 | 14,26 |
| 11 | 0,01 | 1,95 |
| 13 | 0,02 | 0,04 |

Dementsprechend können im sauren bis neutralen pH-Wert-Bereich mit den PVAm-ausgerüsteten PET-Vliesen im Sinne der Erfindung Chromatmengen von bis zu 14,3 mg/g des Trägermaterials adsorbiert werden, wohingegen die nicht ausgerüsteten Materialien keine signifikante Chromatadsorption aufweisen.

### Ausführungsbeispiel 2

Nasschemische Immobilisierung von Chitosan an Baumwolle und Adsorption von Oxoanionen aus belasteten Wässern am Beispiel von Chromat

### A. Verwendete Materialien und Chemikalien

Als textiles Substrat diente ein handelsübliches Gewebe aus Baumwolle (BW) mit einem Flächengewicht von 170 g/m² (WFK Testgewebe GmbH, Brüggen).

Als Polyelektrolyt wurde ein kommerziell verfügbares Chitosan der ChiPro GmbH (Bremen) verwendet.

### B. Nasschemische Immobilisierung von Chitosan an Baumwolle

12,5 mmol Chitosan werden in 50 mL verdünnter Essigsäure (1%) gelöst, 40 mL H₂O (dest.) zugegeben und die Lösung auf 0°C gekühlt. Der pH-Wert der Lösung wird mit Natronlauge (0,5 mol/L) auf pH 5-6 eingestellt und es werden 0,42 g Cyanurchlorid gelöst in 5 mL 1,4-Dioxan zugegeben. Der Ansatz wird für 2 h bei 0°C gerührt, dann auf RT gebracht und auf 100 mL aufgefüllt. Anschließend wird das klimatisierte Baumwollgewebe bis zu einer Flottenaufnahme von mind. 100 % eingetaucht und bei 80 °C getrocknet. Es wird bei 130 °C für 3 min fixiert. Anschließend wird in einem Puffer mit dem pH-Wert 4,66 (1:1 verdünnt mit H₂O) gewaschen und so lang mit Wasser gespült bis das Waschwasser neutral ist. Das Gewebe wird bei 80°C getrocknet, klimatisiert und die Auflage bestimmt. Die Prozedur führt zu einer permanenten Chitosan-Auflage von 2,0 Gew.-% (+/- 10 %).

### C. Chromatadsorption

Zur Bestimmung der maximalen Chromatbeladung wurden die Chitosanausgerüsteten Baumwollgewebe jeweils in 5 ml 1 g/L Chromatlösung unterschiedlichen pH-Wertes (pH-Wert-Bereich 3 - 13, eingestellt mit verdünnter Salzsäure bzw. Natronlauge) eingelegt und für 30 min darin belassen. Die Proben wurden für 1 min mit destilliertem Wasser ausgespült und die Prozedur wiederholt. Anschließend wurden die Proben erneut gespült und über Nacht bei Raumtemperatur getrocknet. Nach einer visuellen Begutachtung (Chromatfärbung) wurden die Proben Mikrowellen-unterstützt in einer 70%-igen HNO₃ aufgeschlossen und der Chromgehalt quantitativ mittels ICP-OES bestimmt. **Abbildung 6** zeigt Fotografien der Baumwollgewebe nach der Chromatbehandlung.

Tabelle 2 zeigt die quantitativen Analyseergebnisse der Chromatadsorption.

**Tabelle 2: pH-Wert-abhängige Adsorption von Chromat [mg/g] an mit Chitosan ausgerüsteten Baumwollgeweben im Vergleich zum nicht ausgerüsteten Material.**

| pH-Wert | Chromatadsorption an unbehandelter Baumwolle [mg/g] | Chromatadsorption an mit Chitosan ausgerüsteter Baumwolle [mg/g] |
|---|---|---|
| 3 | 0,59 | 5,40 |
| 5 | 0,23 | 4,03 |
| 7 | 0,10 | 1,44 |
| 11 | 0,05 | 0,08 |
| 13 | 0,06 | 0,09 |

Dementsprechend können im sauren pH-Wert-Bereich mit den Chitosanausgerüsteten Baumwollgeweben im Sinne der Erfindung Chromatmengen von bis zu 5,4 mg/g des Trägermaterials adsorbiert werden, wohingegen die nicht ausgerüsteten Materialien keine signifikante Chromatadsorption aufweisen. Gleichwohl zeigt sich durch die Chitosan-Ausrüstung im neutralen pH-Wert-Bereich eine immer noch signifikante Chromatadsorption von etwa 1,4 mg/g.

### Ausführungsbeispiel 3

Nasschemische Immobilisierung von Chitosan an Baumwolle mit anschließender Quartänisierung der freien Aminogruppen und Adsorption von Oxoanionen aus belasteten Wässern am Beispiel von Chromat

### A. Verwendete Materialien und Chemikalien

Als textiles Substrat diente ein handelsübliches Gewebe aus Baumwolle (BW) mit einem Flächengewicht von 170 g/m² (WFK Testgewebe GmbH, Brüggen).

Als Polyelektrolyt wurde ein kommerziell verfügbares Chitosan der ChiPro GmbH (Bremen) verwendet.

Für die Quartärnisierung der freien Aminogruppen des gebundenen Chitosans wurden Formaldehyd, Natriumborhydrid, lodmethan und Natriumiodid (alle > 99 %, Sigma-Aldrich Chemie GmbH, München) verwendet.

### B. Nasschemische Immobilisierung von Chitosan an Baumwolle und anschließende Quartänisierung der freien Aminogruppen

Chitosan wird permanent an einem Baumwollgewebe immobilisiert. 10 g des klimatisierten Materials werden in 500 mL H₂O/Methanol (1:1) suspendiert, 0,1 mol Formaldehyd zugegeben. Der Ansatz wird für 4 h gerührt, dann mit 20 mL 10%iger wässriger NaBH₄-Lösung versetzt und für weitere 2 h gerührt. Anschließend wird das Gewebe entnommen und in 150 mL N-Methyl-2-pyrrolidon suspendiert. Es werden 20 mL Natronlauge (1 mol/L), 2 mL lodmethan hinzugefügt und der Ansatz mit so viel Natriumiodid versetzt bis sich eine 0,2 mol/L Lösung ergibt. Der Ansatz wird über 12 h bei 50°C gerührt.

### C. Chromatadsorption

Zur Bestimmung der maximalen Chromatbeladung wurden die mit quartärnisiertem Chitosan ausgerüsteten Baumwollgewebe jeweils in 5 ml 1 g/L Chromatlösung unterschiedlichen pH-Wertes (pH-Wert-Bereich 3 - 13, eingestellt mit verdünnter Salzsäure bzw. Natronlauge) eingelegt und für 30 min darin belassen. Die Proben wurden für 1 min mit destilliertem Wasser ausgespült und die Prozedur wiederholt. Anschließend wurden die Proben erneut gespült und über Nacht bei Raumtemperatur getrocknet. Nach einer visuellen Begutachtung (Chromatfärbung) wurden die Proben Mikrowellen-unterstützt in einer 70%-igen HNO₃ aufgeschlossen und der Chromgehalt quantitativ mittels ICP-OES bestimmt. **Abbildung 7** zeigt Fotografien der Baumwollgewebe nach der Chromatbehandlung.

Dementsprechend können im sauren pH-Wert-Bereich mit den mit quartärnisiertem Chitosan ausgerüsteten Baumwollgeweben im Sinne der Erfindung Chromatmengen von bis zu 6,8 mg/g des Trägermaterials adsorbiert werden, wohingegen die nicht ausgerüsteten Materialien keine signifikante Chromatadsorption aufweisen. Gleichwohl kann durch die nachträgliche Quartärnisierung des Chitosans im Sinne der Erfindung die adsorbierbare Chromatmenge im neutralen Bereich drastisch von etwa 1,4 mg/g auf 6,7 mg/g gesteigert werden.

**Tabelle 3: pH-Wert-abhängige Adsorption von Chromat [mg/g] an mit quartärnisiertem Chitosan ausgerüsteten Baumwollgeweben im Vergleich zum nicht ausgerüsteten Material.**

| pH-Wert | Chromatadsorption an unbehandelter Baumwolle [mg/g] | Chromatadsorption an mit quartämisiertem Chitosan ausgerüsteter Baumwolle [mg/g] |
|---|---|---|
| 3 | 0,59 | 6,84 |
| 5 | 0,23 | 6,66 |
| 7 | 0,10 | 6,69 |
| 11 | 0,05 | 0,08 |
| 13 | 0,06 | 0,08 |

## Patentansprüche

1. Verwendung polymerer Trägermaterialen, die eine Ausrüstung mit immobilisierten kationischen Polyelektrolyten aufweisen, welche geeignet sind, anionische Metallationen aus wässrigen Lösungen zu adsorbieren, zur Bindung metallischer Oxoanionen aus wässriger Lösung bei einem pH-Wert < 8.

2. Verwendung polymerer Trägermaterialien, die eine Ausrüstung mit immobilisierten kationischen Polyelektrolyten aufweisen, welche geeignet sind, anionische Metallationen aus wässrigen Lösungen zu adsorbieren, zur Herstellung von Filtern für metallische Oxoanionen in wässriger Lösung mit einem pH-Wert < 8.

3. Verwendung nach Anspruch 1 oder 2, **dadurch gekennzeichnet, dass** die Trägermaterialien textile Materialien sind.

4. Verwendung nach Anspruch 3, **dadurch gekennzeichnet, dass** die Trägermaterialien textile Flächengebilde sind.

5. Verwendung nach einem der Ansprüche 3 oder 4, **dadurch gekennzeichnet, dass** die Polyelektrolyte an textilen Flächengebilden aus Polyester, Polyamid, Polyacrylnitril, Baumwolle oder Viskose immobilisiert sind.

6. Verwendung nach einem der vorstehenden Ansprüche, **dadurch gekennzeichnet, dass** die kationischen Polyelektrolyte amin- oder ammoniumfunktionalisiert sind.

7. Verwendung nach Anspruch 6, **dadurch gekennzeichnet, dass** die kationischen Polyelektrolyte quartärnisierte Ammoniumfunktionen enthalten.

8. Verwendung nach einem der vorstehenden Ansprüche, **dadurch gekennzeichnet, dass** die immobilisierten kationischen Polyelektrolyte Polyvinylamin, Polyvinylguanidin, Polyalkylamin, Polyallylguanidin oder Chitosan sowie ihre quartärnisierten Derivate sind.

9. Verwendung nach Anspruch 1 oder 2, **dadurch gekennzeichnet, dass** die anionischen Metallionen Oxoanionen sind, ausgewählt aus Chromaten, Arsenaten, Wolframaten, Molybdaten oder Vanadaten.

## Claims

1. Use of polymeric support materials, which have a furnishing of immobilized cationic polyelectrolytes suitable for adsorbing anionic metallate ions from aqueous solutions, for the binding of metallic oxoanions from aqueous solution at a pH < 8.

2. Use of polymeric support materials, which have a furnishing of immobilized cationic polyelectrolytes suitable for adsorbing anionic metallate ions from aqueous solutions, for the production of filters for metallic oxoanions in aqueous solution with a pH < 8.

3. Use according to Claim 1 or 2, **characterized in that** the support materials are textile materials.

4. Use according to Claim 3, **characterized in that** the support materials are textile fabrics.

5. Use according to either of Claims 3 and 4, **characterized in that** the polyelectrolytes are immobilized on textile fabrics of polyester, polyamide, polyacrylonitrile, cotton or viscose.

6. Use according to any of the preceding claims, **characterized in that** the cationic polyelectrolytes are amine- or ammonium-functionalized.

7. Use according to Claim 6, **characterized in that** the cationic polyelectrolytes comprise quaternized ammonium functions.

8. Use according to any of the preceding claims, **characterized in that** the immobilized cationic polyelectrolytes are polyvinylamine, polyvinylguanidine, polyalkylamine, polyallylguanidine or chitosan and also quaternized derivatives thereof.

9. Use according to Claim 1 or 2, **characterized in that** the anionic metal ions are oxoanions selected from chromates, arsenates, tungstates, molybdates or vanadates.

## Revendications

1. Utilisation de matériaux supports polymères, qui sont munis de polyélectrolytes cationiques immobilisés, qui sont appropriés pour adsorber des ions métallate anioniques à partir de solutions aqueuses, pour la liaison d'anions oxo métalliques à partir d'une solution aqueuse à un pH < 8.

2. Utilisation de matériaux supports polymères, qui sont munis de polyélectrolytes cationiques immobilisés, qui sont appropriés pour adsorber des ions métallate anioniques à partir de solutions aqueuses, pour la fabrication de filtres pour anions oxo métalliques dans une solution aqueuse à un pH < 8.

3. Utilisation selon la revendication 1 ou 2, **caractérisée en ce que** les matériaux supports sont des matériaux textiles.

4. Utilisation selon la revendication 3, **caractérisée en ce que** les matériaux supports sont des structures textiles plates.

5. Utilisation selon l'une quelconque des revendications 3 ou 4, **caractérisée en ce que** les polyélectrolytes sont immobilisés sur des structures textiles plates constituées de polyester, polyamide, polyacrylonitrile, coton ou viscose.

6. Utilisation selon l'une quelconque des revendications précédentes, **caractérisée en ce que** les polyélectrolytes cationiques sont fonctionnalisés par des amines ou de l'ammonium.

7. Utilisation selon la revendication 6, **caractérisée en ce que** les polyélectrolytes cationiques contiennent des fonctions ammonium quaternisées.

8. Utilisation selon l'une quelconque des revendications précédentes, **caractérisée en ce que** les polyélectrolytes cationiques immobilisés sont de la polyvinylamine, de la polyvinylguanidine, de la polyalkylamine, de la polyallylguanidine ou du chitosan, ainsi que leurs dérivés quaternisés.

9. Utilisation selon la revendication 1 ou 2, **caractérisée en ce que** les ions métalliques anioniques sont des anions oxo, choisis parmi les chromates, les arséniates, les tungstates, les molybdates ou les vanadates.
